# EUROPÄISCHE PATENTSCHRIFT

(11) **EP 1 424 231 B1**
(45) Veröffentlichungstag und Bekanntmachung des Hinweises auf die Patenterteilung: **24.05.2006**
(21) Anmeldenummer: 03026461.8
(22) Anmeldetag: 20.11.2003
(51) Int. Cl.: B60H 1/00

(54) **Kraftfahrzeug mit einer Heizungs- und Belüftungs- bzw. Klimaanlage**
Motor vehicle with a heating and ventilating or air conditioning device
Véhicule automobile avec un dispositif de chauffage et d'aération ou de climatisation

(30) Priorität: 30.11.2002 DE 10256001
(43) Veröffentlichungstag der Anmeldung: 02.06.2004
(73) Patentinhaber: ADAM OPEL AG, 65423 Rüsselsheim (DE)
(72) Erfinder: Jordan, Frank, 10128 Torino (IT); Weber, Volker, 55437 Appenheim (DE)

(56) Entgegenhaltungen:
- DE-A- 19 907 401
- DE-A- 19 948 735
- DE-C- 19 813 093
- US-B1- 6 454 178
- PATENT ABSTRACTS OF JAPAN Bd. 2003, Nr. 01, 14. Januar 2003 (2003-01-14) & JP 2002 277425 A (TGK CO LTD), 25. September 2002 (2002-09-25)

## Beschreibung

Die Erfindung bezieht sich auf Kraftfahrzeug mit einer Heizungs- und Belüftungs- bzw. Klimaanlage, der Messwerte eines Sonnensensors und Innenraumtemperatursensors zugeleitet werden, die an einem gemeinsamen Gehäuse angeordnet sind.

Die DE 36 24 171 A1 zeigt eine Heiz- und/oder Klimaanlage für ein Kraftfahrzeug, der neben einem Temperatursensor wenigstens ein Feuchtesensor zugeordnet ist. Im Innenraum des Kraftfahrzeuges sind ein erster Temperatursensor und ein erster Feuchtesensor zur Regelung des Innenraumklimas auf behagliche Werte vorgesehen. Ein zweiter Temperatursensor und zweiter Feuchtesensor, die im Außenbereich des Kraftfahrzeuges, vorzugsweise im Außenluft-Ansaugkanal der Heiz- und/oder Klimaanlage angeordnet sind, ermöglichen eine Aufbereitung der angesaugten Luft bereits vor dem Einblasen in den Innenraum. Ein dritter Temperatursensor und ein dritter Feuchtesensor, die in Scheibennähe angeordnet sind, ermöglichen das Erkennen einer bevorstehenden oder bereits existierenden Taupunktunterschreitung auf der Innenseite der Scheiben des Kraftfahrzeuges und eine Einleitung entsprechender Gegenmaßnahmen. Der dritte Temperatursensor in Scheibennähe kann entfallen, wenn aus einer Korrelation von Außen- und Innenraumtemperatur die Scheibentemperatur geschätzt wird. Eine Verbesserung der Schätzung ist durch zusätzliche Heranziehung des Signals eines Strahlungssensors möglich. Sämtliche Sensoren sind örtlich getrennt voneinander angeordnet und jeweils separat mit einem Regelgerät der Heiz- und/oder Klimaanlage elektrisch verbunden, was mit einem erheblichen Installationsaufwand einhergeht.

Des Weiteren offenbart die DE 199 07 401 A1 ein Verfahren zur Verhinderung von Scheibenbeschlag in einem Kraftfahrzeug, bei dem sich auf eine Scheibe niederschlagende relative Feuchtigkeit von einem Feuchtesensor als eine relative Feuchte gemessen wird und ein der gemessenen Feuchte entsprechendes Feuchtesignal einem Steuergerät einer Belüftungsanlage zugeführt wird. Um die Fahrsicherheit zu erhöhen, indem zuverlässig, bei allen klimatischen Bedingungen und unabhängig von der Sonneneinstrahlung, ein Beschlagen der Scheiben rechtzeitig erkannt wird, wird vorgeschlagen, dass dem Steuergerät ein Signal eines Sonnensensors zugeführt wird, dass der Intensität der einfallenden Sonnenstrahlung entspricht. Aus diesem Signal wird die Erwärmung des Feuchtesensors in etwa bestimmt und aus der Erwärmung und der gemessenen relativen Feuchte wird die tatsächliche relative Feuchte an der Scheibenoberfläche bestimmt.

Ferner ist aus der DE 198 13 093 C1 ein Kraftfahrzeug mit einer Heizungs- und Belüftungs- bzw. Klimaanlage bekannt, der Messwerte zumindest eines Sonnensensors und eines Temperatursensors zugeleitet werden, wobei der Temperatursensor und der Sonnensensor in einem gemeinsamen Sensorgehäuse im Kraftfahrzeug-Innenraum angeordnet sind. Der Temperatursensor dient als einziger Innenraumtemperatursensor zur Erfassung der Temperatur des Kraftfahrzeug-Innenraumes. Eine Messung der Luftfeuchte ist nicht vorgesehen.

JP 2002 277 425 A (Patent Abstracts of Japan Bd. 2003, No. 01) beschreibt einen Temperatursensor, der mit einem Feuchtsensor und einem Gebläsemotor in Baueinheit in einem Kraftfahrzeug angeordnet ist.

Es ist Aufgabe der Erfindung, ein Kraftfahrzeug der eingangs genannten Art zu schaffen, das eine einfach zu installierende Messsensorik zur Bereitstellung von Messwerten umfasst, auf deren Basis eine komfortable Steuerung der Heizungs- und Belüftungs- bzw. Klimaanlage erfolgt.

Erfindungsgemäß wird die Aufgabe dadurch gelöst, dass an dem Gehäuse zusätzlich ein Messwerte an die Anlage liefernder Feuchtesensor angeordnet ist und der Innenraumtemperatursensor und der Feuchtesensor derart an dem Gehäuse angeordnet sind, dass der Innenraumtemperatursensor gegenüber einem aus einer Defrosterdüse austretenden Luftstrom abgeschottet ist und der Feuchtesensor in einen Strömungskanal der Defrosterdüse ragt. Sonach wird eine drohende Taupunktunterschreitung, die ein Beschlagen der der Defrosterdüse zugeordneten Scheibe zur Folge hat, erkannt und geeignete Gegenmaßnahmen, wie beispielsweise ein Umschalten in einen Frischluftbetrieb, können eingeleitet werden.

Aufgrund dieser Maßnahme ist die Anbringung unterschiedlicher Sensoren im Innenraum des Kraftfahrzeuges mit einem geringen Installationsaufwand gewährleistet. Die Messwerte des Sonnensensors, des Innenraumtemperatursensors und des Feuchtesensors ermöglichen die Steuerung der Heizungs- und Belüftungs- bzw. Klimaanlage zur Erzielung eines behaglichen Innenraumklimas.

Zur weiteren Vereinfachung der Installation kontaktieren zweckmäßigerweise elektrische Anschlüsse des Sonnensensors, des Innenraumtemperatursensors und des Feuchtesensors eine Steuereinheit der Anlage oder einen Fahrzeug-Bus mittels eines gemeinsamen Steckverbinders. Die Messsignale werden als getaktete Signale zur Weiterverarbeitung übertragen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

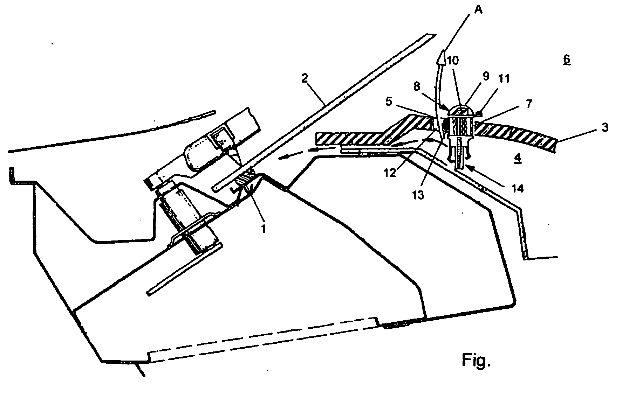

Die Erfindung wird im Folgenden anhand eines Ausführungsbeispieles unter Bezugnahme auf die zugehörige Zeichnung näher erläutert. Die einzige Figur zeigt einen Längsschnitt durch den relevanten Bereich des erfindungsgemäßen Kraftfahrzeuges.

Das Kraftfahrzeug umfasst eine auf einen Karosserieflansch 1 aufgeklebte Windschutzscheibe 2, hinter der im Inneren des Kraftfahrzeuges eine Armaturentafel 3 angeordnet ist, die die obere Begrenzung eines Defrosterkanals 4 bildet, und in die eine zur Windschutzscheibe 2 ausgerichtete Defrosterdüse 5 eingelassen ist. Aus der Defrosterdüse 5 tritt, wie durch Pfeil A dargestellt, von einer Klimaanlage erzeugter Luftstrom in einen Innenraum 6 des Kraftfahrzeuges.

In die Armaturentafel 3 ist ein Gehäuse 7 eines Sonnensensors 8 eingeklipst und verdrehsicher gehaltert. Der Sonnensensor 8 besteht aus unter einer lichtdurchlässigen Haube 9 angeordneten Sensorelementen 10, die die auftreffende Sonnenstrahlung sensieren. An dem Gehäuse 7 ist ein Innenraumtemperatursensor 11 thermisch von dem Gehäuse 7 und der Armaturentafel 2 entkoppelt befestigt. Des Weiteren trägt das Gehäuse 7 einen in einen Strömungskanal 12 der Defrosterdüse 5 ragenden Feuchtesensor 13, wobei der Innenraumtemperatursensor 11 unter Zwischenordnung des Gehäuses 7 zu dem Feuchtesensor 13 ausgerichtet ist, um ihn gegenüber dem aus der Defrosterdüse 5 austretenden Luftstrom abzuschotten. Zur Kopplung des Sonnensensors 8, des Innenraumtemperatursensors 11 und des Feuchtesensors 13 mit der Klimaanlage weist das Gehäuse 7 einen Steckverbinder 14 auf.

### Bezugszeichenliste

- 1.: Karosserieflansch
- 2.: Windschutzscheibe
- 3.: Armaturentafel
- 4.: Defrosterkanal
- 5.: Defrosterdüse
- 6.: Innenraum
- 7.: Gehäuse
- 8.: Sonnensensor
- 9.: Haube
- 10.: Sensorelement
- 11.: Innenraumtemperatursensor
- 12.: Strömungskanal
- 13.: Feuchtesensor
- 14.: Steckverbinder
- A: Pfeil

## Patentansprüche

1. Kraftfahrzeug mit einer Heizungs- und Belüftungs- bzw. Klimaanlage, der Messwerte eines Sonnensensors (8) und Innenraumtemperatursensors (11) zugeleitet werden, die an einem gemeinsamen Gehäuse (7) angeordnet sind, **dadurch gekennzeichnet, dass** an dem Gehäuse (7) zusätzlich ein Messwerte an die Anlage liefernder Feuchtesensor (13) angeordnet ist, wobei **dass** der Innenraumtemperatursensor (11) und der Feuchtesensor (13) derart an dem Gehäuse (7) angeordnet sind, dass der Innenraumtemperatursensor (11) gegenüber einem aus einer Defrosterdüse (5) austretenden Luftstrom abgeschottet ist und der Feuchtesensor (13) in einen Strömungskanal (12) der Defrosterdüse (5) ragt.

2. Kraftfahrzeug nach Anspruch 1, **dadurch gekennzeichnet, dass** elektrische Anschlüsse des Sonnensensors (8), des Innenraumtemperatursensors (11) und des Feuchtesensors (13) eine Steuereinheit der Anlage oder einen Fahrzeug-Bus mittels eines gemeinsamen Steckverbinders (14) kontaktieren.

## Claims

1. A motor vehicle including a heating and ventilation or air-conditioning system to which measured values are supplied from a sun sensor (8) and an interior temperature sensor (11) which are arranged on a common housing (7), **characterized in that** a humidity sensor (13) supplying measured values to the system is additionally arranged on the housing (7), wherein the interior temperature sensor (11) and the humidity sensor (13) are arranged on the housing (7) in such a manner that the interior temperature sensor (11) is shielded with respect to an air flow emerging from a defroster nozzle (5) and the humidity sensor (13) protrudes into a flow channel (12) of the defroster nozzle (5).

2. A motor vehicle according to Claim 1, **characterized in that** electrical connectors of the sun sensor (8), the interior temperature sensor (11) and the humidity sensor (13) contact a control unit of the system or a vehicle bus by means of a common plug connector (14).

## Revendications

1. Véhicule automobile avec un dispositif de chauffage et d'aération ou de climatisation auquel sont amenées les valeurs de mesure d'un capteur solaire (8) et d'un capteur de température intérieure (11) qui sont disposés dans un boîtier commun (7), **caractérisé en ce qu'**un capteur d'humidité (13) fournissant les valeurs de mesure au dispositif est disposé, en plus, dans le boîtier (7), **en ce que** le capteur de température intérieure (11) et le capteur d'humidité (13) sont disposés dans le boîtier (7) de telle manière que le capteur de température intérieure (11) est cloisonné par rapport à un courant d'air sortant d'une buse de dégivrage (5) et que le capteur d'humidité (13) fait saillie dans un conduit d'écoulement (12) de la buse de dégivrage (5).

2. Véhicule automobile selon la revendication 1, **caractérisé en ce que** les raccords électriques du capteur solaire (8), du capteur de température intérieure (11) et du capteur d'humidité (13) sont en contact avec une unité de commande du dispositif ou avec un bus du véhicule à l'aide d'un connecteur commun (14).
